# EUROPÄISCHE PATENTSCHRIFT

(11) **EP 1 877 836 B1**
(45) Veröffentlichungstag und Bekanntmachung des Hinweises auf die Patenterteilung: **14.01.2015**
(21) Anmeldenummer: 06707392.4
(22) Anmeldetag: 03.03.2006
(51) Int. Cl.: G01V 5/00

(54) **VERFAHREN UND VORRICHTUNG ZUR KONTROLLE VON HANDGEPÄCK UND ANDEREN MITGEFÜHRTEN GEGENSTÄNDEN**
METHOD AND DEVICE FOR CONTROLLING HAND LUGGAGE AND OTHER CARRIED OBJECTS
PROCEDE ET DISPOSITIF DE CONTROLE DE BAGAGES ET D'AUTRES OBJETS EMPORTES

(30) Priorität: 10.03.2005 DE 102005011054
(43) Veröffentlichungstag der Anmeldung: 16.01.2008
(73) Patentinhaber: Smiths Heimann GmbH, 65205 Wiesbaden (DE)
(72) Erfinder: HENKEL, Rainer, 55444 schweppenhausen (DE)
(74) Vertreter: Greif, Thomas
(86) Internationale Anmeldenummer: PCT/EP2006/001927
(87) Internationale Veröffentlichungsnummer: WO 2006/094709

(56) Entgegenhaltungen:
- WO-A-03/067770
- US-A- 5 600 303

## Beschreibung

Die Erfindung betrifft ein Verfahren und eine Vorrichtung zur Kontrolle von Handgepäck und anderen von Flugpassagieren mitgeführten Gegenständen beim Check-In.

Zur Überprüfung von Handgepäck und anderen Gegenständen, die Flugpassagiere beim Check-In mitführen, sind eine Vielzahl von Verfahren und Geräten bekannt. So sind bekannterweise auf Flughäfen Röntgenprüfanlagen für das Handgepäck und Metalldetektoren zur Personenkontrolle fest installiert, um die Flugpasaagiere und Ihr Handgepäck auf sicherhelterelevante Gegenstände wie Waffen, Explosivstoffe etc. zu überprüfen.

Ebenso sind bereits Röntgenprüfanlagen bekannt, die eine automatische Detektion von Explosivstoffen in geschlossenen Behältern erlauben. So beschreibt die DE 199 54 662 eine Röntgenprüfanlage zur Detektion von unzulässigen Gegenständen in Objekten, die in einer ersten Untersuchungsstufe Positionen festlegt, welche in einer zweiten Stufe mit Hilfe von Röntgenbeugung genauer analysiert werden. Aus der US 5.182,764 ist eine Prüfanlage für Gepäckstücke bekannt, bei der das Prüfgut In einer ersten Stufe von einem Röntgenscanner durchstrahlt wird. Dessen Ergebnlsse werden dazu genutzt, Positionen festzulegen, die in einer anschließenden Computertomographie (CT) abgebildet werden. Aus der US 5,600,303 A ist ein Verfahren zur Detektion von verdächtigen Gegenständen in Handgepäck bekannt, bei dem in einer ersten Stufe die Dichte der Fracht geprüft wird. Ist eine gewisse Dichte vorhanden, so werden die Gepäckstücke in einer nachfolgenden Röntgenrückstreuprüfeinrichtung geprüft. Sind Gepäckstücke verdächtig ohne die Mindestdichte aufzuweisen, so folgt eine Prüfung in einer Beug ungsprüfeinrichtung.

Die bekannten mehrstufigen automatischen Prüfanlagen werden für die Kontrolle von aufgegebenem Gepäck genutzt. Aufgrund der Größe, der hohen Kosten, des eventuell geringen Durchsatzes und des hohen Wartungsaufwands sind diese Anlagen für die Untersuchung von Handgepäck und von Passagieren mitgeführten Gegenständen (z.B. Bekleidungsstücke) beim Check-In im Flughafen jedoch weniger geeignet. Die Erhöhung des Durchsatzes durch Parallellsierung mehrerer Anlagen ist aus Platz- und Kostengründen keine realistische Option.

Gepäckstücke lassen sich im Hinblick auf die Überprüfung mittels Röntgenprüfanlagen in Klassen unterschiedlicher Komplexität einteilen. Während die vom Flugpassagier aufgegebenen größeren Gepäckstücke überwiegend einen sehr komplexen Inhalt aufweisen, schwankt die Komplexität von Handgepäck und anderen vom Flugpassagier mitgeführten Gegenständen erheblich. So sind Jacken oder andere Oberbekleidung, die üblicherweise in Wannen abgelegt kontrolliert werden, von geringer Komplexität und vergleichsweise einfach zu prüfen. Bei Handgepäck, beispielsweise Taschen, schwankt die Komplexität je nach deren Inhalt. Erfahrungsgemäß besteht das Handgepäck aus 30%-50% einfachen und 50%-70% komplexen Gegenständen. Dieser Umstand wird nach der Erfindung dazu genutzt, die Zahl der Objekte zu reduzieren, für die eine aufwendige und damit eine intensive Untersuchung durchgeführt werden muss.

Der Erfindung liegt daher die Aufgabe zu Grunde, ein Verfahren und eine Vorrichtung zur Kontrolle von Handgepäck und mitgeführten Gegenständen zu schaffen, das (die) eine komplette Prüfung des Handgepäcks und aller mitgeführten Gegenstände ermöglicht und das (die) in den Check-In-Prozess integrierbar ist.

Diese Aufgabe wird nach der Erfindung gemäß Anspruch 1 und Anspruch 5 dadurch gelöst, dass in einer ersten Prüfelnrichtung die Komplexität eines Gegenstandes automatisch bestimmt wird und anschließend in Abhängigkeit von der ermittelten Komplexität unterschiedliche weitere Prüfschritte durchgeführt werden.

Bevorzugt wird für die automatische Komplexitätsermittlung ein nach den Röntgenabsorptionsprinzip arbeitender Vorscanner eingesetzt. Er ist mit einer Steuer- und Auswerteelektronik verbunden, die einen Algorithmus enthält, der aufgrund der Daten des Vorscanners einen Komplexitätsgrad des zu prüfenden Gegenstandes bestimmt. Zur Bestimmungen des Komplexitätsgrades werden als Parameter der Anteil und die Größe von Röntgenstahlen aufhärtenden Materialien im Gegenstand und/oder die Dicke von aufhärtenden Materialien im Gegenstand und/oder der Anteil von strukturierten oder inhomogenen Bereichen im Röntgenbild, also ob das Röntgenbild lokal In viele kleine unterschiedliche Regionen aufgeteilt ist, verwendet.

Bevorzugt wird aus den Röntgendaten des Vorscanners ein Bild erzeugt, dass einem Bediener angezeigt wird. Dies ermöglicht es, mit den Daten des Vorscanners zugleich eine Überprüfung durch einen Bediener durchzuführen.

Bevorzugt werden bei einem einfach eingestuften Gegenstand die darin befindlichen Objekte in der ersten Stufe automatisch bewertet. Falls die automatische Bewertung ein Objekt als verdächtig einstuft, kann der Bediener diesen Verdacht direkt klären. Die automatische Bewertung, ob verdächtig oder unverdächtig, kann zugunsten einer reinen Bedienerentscheidung auch entfallen. Für einen Gegenstand mit ausschließlich unverdächtigen Objekten entfallen weitere Untersuchungen. Vorteilhaft können diese Gegenstände von der Fördereinrichtung ohne weitere Prüfung beschleunigt durch die weiteren Prüfeinrichtungen hindurchtransportiert werden. Ebenso können diese Gegenstände vorteilhaft an den weiteren Prüfeinrichtungen vorbeitransportiert werden, dies insbesondere, wenn die weiteren Prüfeinrichtungen noch durch die Analyse von vorhergehenden Gegenständen belegt sind. Einfache Gegenstände, die nicht als unverdächtig bewertet werden können, sowie Gegenstände, die als komplex eingestuft wurden, werden von der Fördereinrichtung in die nachfolgenden Prüfeinrichtungen transportiert und dort intensiver analysiert. Zur Steigerung der Effizienz kann diese Analyse nur an verdächtigen Stellen durchgeführt werden, die in der Vorscanner-Stufe festgelegt und in bekannter Weise an die darauf folgenden Prüfeinrichtungen übergeben wurden. Diese weiteren Stufen können beispielsweise eine Beugungsstufe oder ein CT-Scanner sein, aber auch auf allen anderen Prinzipien basierende Einrichtungen. Einfache Gegenstände, die vom Vorscanner als verdächtig klassifiziert wurden, können direkt zur Nachkontrolle gefördert werden, wenn eine manuelle Überprüfung weniger Aufwand erfordert, als eine weitere automatische Prüfung (z.B. bei Kleidungsstücken).

Nachfolgend wird die Erfindung anhand zweier Ausführungsbeispiele näher erläutert:
Figur 1 zeigt eine Seitenansicht einer Prüfvorrichtung
Figur 2 zeigt eine Draufsicht der Prüfvorrichtung nach Figur 1
Figur 3 zeigt die Draufsicht einer Prüfvorrichtung mit zwei Prüflinien

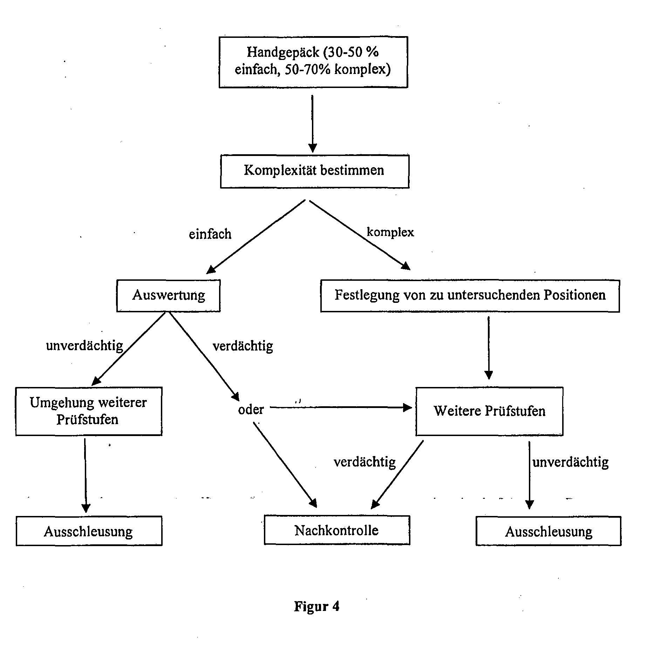

Figur 4 zeigt eine schematische Darstellung des Verfahrens

Die in der Zeichnung dargestellten Prüfvorrichtungen dienen zur Überprüfung von Handgepäck und anderen mitgeführten Gegenständen, die Passagiere beim Check-In mit in das Flugzeug nehmen wollen. Handgepäckstücke wie Taschen oder Notebook-Computer werden direkt in die Vorrichtung eingelegt, kleinere Gegenstände wie Bekleidungsstücke, Mobiltelefone, Schlüssel werden vorher in Wannen oder Schalen bekannter Art abgelegt.

In den dargestellten Ausbildungen der Erfindung beginnt die Prüfvorrichtung jeweils mit einer ersten Fördereinrichtung 1, auf der der zu prüfende Gegenstand (hier ein Gepäckstück 2) abgelegt und dann in die erste Prüfeinrichtung 3 transportiert wird. Dort wird das Gepäckstück 2 von einer Anordnung aus Röntgenstrahlgeneratoren und jeweils gegenüberliegenden Detektorzeilen durchstrahlt. Aus den ermittelten Daten bestimmt die hier nicht dargestellte Steuer- und Auswerteelektronik die Komplexität des Gepäckstücks 2 und wertet einfache im Gepäckstück 2 befindliche Prüfobjekte bereits aus. In einer weiteren Ausbildung können bei komplexen Prüfobjekten in Gepäckstücken Orte festgelegt werden, an denen möglicherweise Explosivstoffe vorliegen könnten. Zusätzlich werden die ermittelten Daten in ein Bild umgesetzt und auf einer hier nicht dargestellten Anzeigeeinheit für den Bediener dargestellt. Wenn sowohl die Auswerteelektronik als auch der Bediener das Gepäckstück 2 freigeben, sorgt die Sortiereinrichtung 4 dafür, dass das Gepäckstück 2 über die Fördereinrichtung 7 verzugslos an der zweiten Prüfeinrichtung 5 vorbeitransportiert und ausgeschleust und so an der Entnahmestelle 9 vom Passagier entnommen werden kann.

Nach dem Vorscanner 3 noch ungeklärte Objekte werden über die Sortiereinrichtung 4 von der Fördereinrichtung 1 in eine zweite Prüfeinrichtung 5 eingesteuert und dort intensiv analysiert, oder sie werden über eine Sortiereinrichtung 6 direkt zu einem Nachkontrollplatz 8 für eine manuelle Nachkontrolle gefördert. Dazu werden die beiden Fördereinrichtungen 1, 7 hinter der zweiten Prüfeinrichtung 5 wieder zusammengeführt. Anschließend folgt die zweite Sortiereinrichtung 6, von der die Gegenstände alternativ zu dem Nachkontrollplatz 8 oder direkt zu der Entnahmestelle 9 gefördert werden.

Wenn in Vorscanner 3 mögliche Positionen von Explosivstoffen festgelegt wurden, kann die aufwendigere Untersuchung in Prüfeinrichtung 5 auf diese Positionen beschränkt werden. Sollte die Prüfung negativ ausfallen, wird das Gepäckstück zur Entnahmestelle 9 transportiert und kann vom Passagier entnommen werden. Erkennt die Auswerteelektronik einen Explosivstoff oder ist keine eindeutige Entscheidung möglich, erhält der Bediener einen Hinweis und das Gepäckstück 2 wird über die Sortiereinrichtung 6 zum Nachkontrollplatz 8 transportiert.

In der Zeit, während in Prüfeinrichtung 5 die Prüfung läuft, kann die Steuerelektronik bereits veranlassen, dass über die Fördereinrichtung 1 der nächste zu prüfende Gegenstand in den Vorscanner 3 transportiert wird. Günstigenfalls entfällt für diesen Gegenstand (Gepäckstück 2) die Untersuchungsstufe 5 und er kann, während der vorhergehende Gegenstand noch in der zweiten Prüfeinrichtung 5 geprüft wird, über die Fördereinrichtung 7 zur Entnahmestelle 9 transportiert und dort vom Passagier entnommen werden.

Alternativ kann, z.B. aus Platzgründen, die Fördereinrichtung 7 entfallen. Dann können Gegenstände, die bereits im Vorscanner 3 geklärt wurden, beschleunigt und ohne Prüfung durch die zweite Prüfeinrichtung 5 hindurchtransportiert werden. Die Möglichkeit, einfache Gegenstände an einer belegten Prüfeinrichtung 5 vorbeizuschleusen, würde dann entfallen.

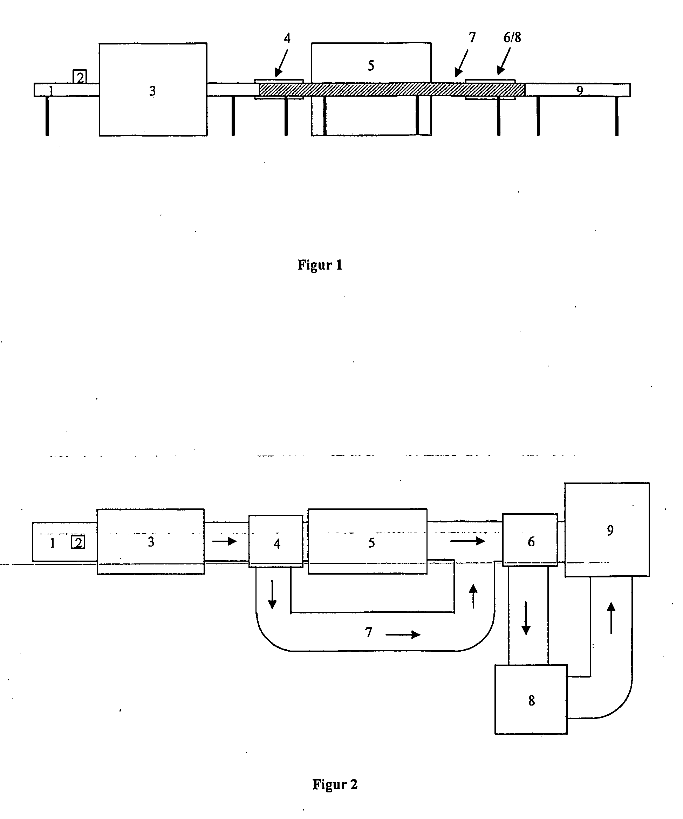

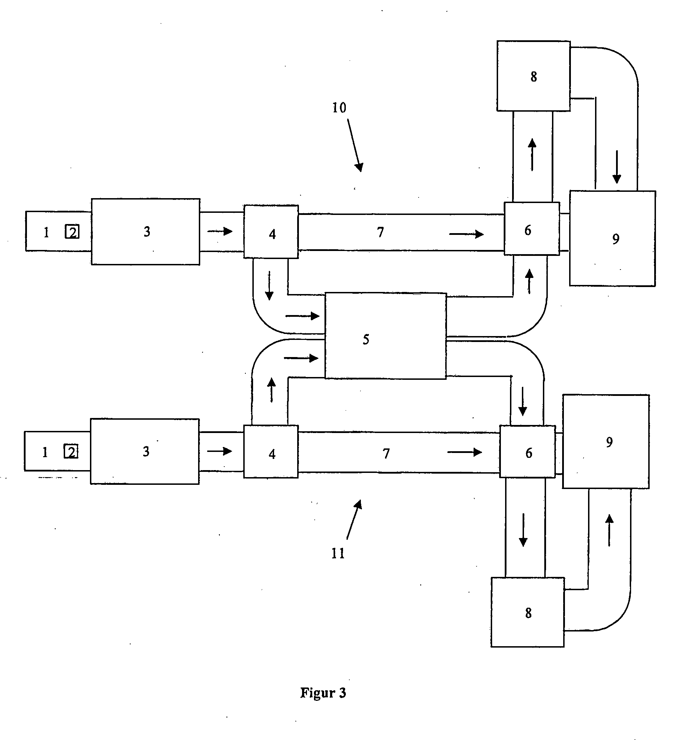

Die Ausführungsform nach den Figuren 1 und 2 enthält nur eine Prüflinie, in der die Gegenstände kontrolliert werden. Bei der Ausführungsform nach Figur 3 sind vorteilhaft zwei Prüflinien 10, 11 angeordnet, von denen die zweite Prüfeinrichtung 5 gemeinsam genutzt wird. Dazu ist die gemeinsame zweite Prüfeinrichtung 5 zwischen den beiden Prüflinien 10, 11 angeordnet. Die übrigen Elemente der beiden Prüflinien (erste Prüfeinrichtung 3, Fördereinrichtungen 1, 7, Sortiereinrichtungen 4 und 6, Nachkontrollplatz 8 und Entnahmestelle 9) sind spiegelbildlich zu einander angeordnet. Anders als bei der Ausführungsform nach den Figuren 1 und 2 verlaufen die Fördereinrichtungen 7, von denen die Gegenstände an der zweiten Prüfeinrichtung 5 vorbeigefördert werden können, gradlinig von der ersten Prüfeinrichtung 3 zu der zweiten Sortiereinrichtung 6. Die Fördereinrichtung 1 jeder Prüflinie 10, 11 verläuft jeweils hinter der ersten Sortiereinrichtung 4 in einem Bogen zu der gemeinsamen Prüfeinrichtung 5 und hinter der Prüfeinrichtung 5 wieder in einem Bogen zu der jeweiligen zweiten Sortiereinrichtung 6 zurück.

Die Ausführungsform nach Figur 3 ermöglicht eine effiziente Nutzung der aufwendigen und teuren zweiten Prüfeinrichtung 5. Dies ist insbesondere dann möglich, wenn der Anteil an einfach eingestuften Gegenständen hoch ist. Falls der Anteil an komplexen Gegenständen extrem niedrig ist, können mehr als zwei Prüflinien eine einzige zweite Prüfeinrichtung 5 gemeinsam nutzen. Die gemeinsame Nutzung einer Prüfeinrichtung 5 durch mehrere Prüflinien wird durch den Umstand begrenzt, dass immer nur ein Gegenstand in der Prüfeinrichtung 5 geprüft werden kann. Die Steuerung der Fördereinrichtung 1 erfolgt daher so, dass Gegenstände nur in die Prüfeinrichtung 5 gefördert werden, wenn diese nicht belegt ist.

## Patentansprüche

1. Verfahren zur Kontrolle von Handgepäck und anderen von Flugpassagieren mitgeführten Gegenständen beim Check-In, **dadurch gekennzeichnet, dass** in einer ersten Prüfeinrichtung (3) unter Verwendung des Anteils und der Größe von Röntgenstrahlen aufhärtenden Materialien im Gegenstand und/oder der Dicke von aufhärtenden Materialien im Gegenstand und/oder dem Anteil von strukturierten oder inhomogenen Bereichen Im Röntgenbild als Parameter der Komplexitätsgrad des Gegenstands im Hinblick auf die Prüfung automatisch bestimmt wird, und dass anschließend in Abhängigkeit von dem bestimmten Komplexitätsgrad unterschiedliche weitere Prüfungsverfahren durchgeführt werden.

2. Verfahren nach Anspruch 1, **dadurch gekennzeichnet, dass** in der ersten Prüfeinrichtung (3) die Gegenstände zugleich automatisch als verdächtig oder unverdächtig bewertet werden.

3. Verfahren nach Anspruch 1 oder 2, **dadurch gekennzeichnet, dass** komplex oder verdächtig bewertete Gegenstände weiteren Prüfverfahren zugeführt werden, während einfache und zugleich unverdächtig bewertete Gegenstände direkt ausgeschleust werden.

4. Verfahren nach einem der Ansprüche 1 bis 3, **dadurch gekennzeichnet, dass** bei komplexen oder verdächtigen Gegenständen von der ersten Prüfeinrichtung (3) die Positionen von in dem Gegenstand befindlichen verdächtigen Objekten bestimmt und diese Positionen an nachfolgende Prüfeinrichtungen übergeben werden.

5. Vorrichtung zur Kontrolle von Handgepäck und anderen mitgeführten Gegenständen bestehend aus
- einer ersten Prüfeinrichtung (3), die dazu eingerichtet ist, unter Verwendung des Anteils und der Größe von Röntgenstrahlen aufhärtenden Materialien im Gegenstand und/oder der Dicke von aufhärtenden Materialien im Gegenstand und/oder dem Anteil von strukturierten oder inhomogenen Bereichen im Röntgenbild als Parameter, den Komplexitätsgrad eines Gegenstandes zu bestimmen,
- einer nachfolgenden zweiten Prüfeinrichtung (5),
- zwei Fördereinrichtungen (1, 7), von denen eine Fördereinrichtung (1) zur zweiten Prüfeinrichtung (5) und die zweite Fördereinrichtung (7) an der zweiten Prüfeinrichtung (5) vorbeiführt, und mit
- einer zwischen der ersten und zweiten Prüfeinrichtung (3, 5) angeordneten Sortiereinrichtung (4), von der die Gegenstände in Abhängigkeit von dem in der ersten Prüfeinrichtung (3) bestimmten Komplexitätsgrad entweder zu der ersten Fördereinrichtung (1) zur Führung zu der zweiten Prüfeinrichtung (5) oder zu der zweiten Fördereinrichtung (7) zur Führung an der zweiten Prüfeinrichtung (5) vorbei transportiert werden.

6. Vorrichtung nach Anspruch 5, **dadurch gekennzeichnet, dass** die beiden Fördereinrichtungen (1, 7) hinter der zweiten Prüfeinrichtung (5) wieder zusammengeführt werden und anschließend eine zweite Sortlereinrichtung (6) folgt; von der die Gegenstände alternativ zu einem Nachkontrollplatz (8) oder direkt zu einer Entnahmestelle (9) gefördert werden.

7. Vorrichtung nach Anspruch 5 oder 6, **dadurch gekennzeichnet, dass** die erste Prüfeinrichtung (3) eine Anordnung aus Röntgenstrahlgeneratoren und jeweils gegenüberliegenden Detektorzeilen enthält.

8. Vorrichtung nach einem der Ansprüche 5 bis 7, **dadurch gekennzeichnet, dass** die zweite Prüfeinrichtung (5) eine auf Röntgenbeugung arbeitende Prüfstufe oder ein CT-Scanner Ist.

9. Vorrichtung nach einem der Ansprüche 5 bis 8, **dadurch gekennzeichnet, dass** zwei oder mehr Prüfilnien (10,11) mit jeweils einer ersten Prüfeinrichtung (3) zur Bestimmung der Komplexitätsgrads und einer nachfolgenden Sortiereinrichtung (4) nebeneinander angeordnet sind, wobei jeweils von der Sortiereinrichtung (4) eine Fördereinrichtung (1) zu einer gemeinsamen zweiten Prüfeinrichtung (5) führt.

10. Vorrichtung nach Anspruch 9, **dadurch gekennzeichnet, dass** zwei Prüflinien (10,11) nebeneinander angeordnet sind und dass sich die gemeinsame zweite Prüfeinrichtung (5) zwischen den beiden Prüflinien (10,11) befindet.

## Claims

1. Method for inspecting hand luggage and other objects carried by aircraft passengers during check-in, **characterized in that**, in a first testing device (3), the level of complexity of the object with regard to the testing is determined automatically by using the proportion and the magnitude of materials in the object that absorb x-rays and/or the thickness of absorbent materials in the object and/or the proportion of structured or inhomogeneous areas in the x-ray image as parameters, and **in that** different further testing methods are then carried out as a function of the level of complexity that is determined.

2. Method according to Claim 1, **characterized in that**, in the first testing device (3), the objects are simultaneously rated automatically as suspicious or unsuspicious.

3. Method according to Claim 1 or 2, **characterized in that** objects rated as complex or suspicious are fed to further testing methods, while objects rated as simple and simultaneously unsuspicious are output directly.

4. Method according to one of Claims 1 to 3, **characterized in that**, in the case of complex or suspicious objects from the first testing device (3), the positions of suspicious objects found in the object are determined, and these positions are passed on to following testing devices.

5. Apparatus for inspecting hand luggage and other carried objects, comprising
- a first testing device (3), which is set up to determine the level of complexity of an object by using the proportion and the magnitude of materials in the object that absorb x-rays and/or the thickness of absorbent materials in the object and/or the proportion of structured or inhomogeneous areas in the x-ray image as parameters,
- a following second testing device (5),
- two conveying devices (1, 7), of which one conveying device (1) leads to the second testing device (5) and the second conveying device (7) leads past the second testing device (5), and having
- a sorting device (4) arranged between the first and second testing devices (3, 5), from which, depending on the level of complexity determined in the first testing device (3), the objects are transported either to the first conveying device (1), to be guided to the second testing device (5), or to the second conveying device (7), to be guided past the second testing device (5).

6. Apparatus according to Claim 5, **characterized in that** the two conveying devices (1, 7) are led together again after the second testing device (5), and there then follows a second sorting device (6), from which the objects are conveyed alternatively to a re-inspection station (8) or directly to a removal point (9).

7. Apparatus according to Claim 5 or 6, **characterized in that** the first testing device (3) contains an arrangement comprising x-ray generators and respectively opposite detector cells.

8. Apparatus according to one of Claims 5 to 7, **characterized in that** the second testing device (5) is a testing stage operating on x-ray diffraction or a CT scanner.

9. Apparatus according to one of Claims 5 to 8, **characterized in that** two or more testing lines (10, 11) each having a first testing device (3) for determining the level of complexity and a following sorting device (4) are arranged beside each other, in each case a conveying device (1) leading from the sorting device (4) to a common second testing device (5).

10. Apparatus according to Claim 9, **characterized in that** two testing lines (10, 11) are arranged beside each other, and **in that** the common second testing device (5) is located between the two testing lines (10, 11).

## Revendications

1. Procédé pour inspecter des bagages et d'autres objets emportés par des passagers de vols lors de l'enregistrement, **caractérisé en ce que** dans un premier dispositif de contrôle (3), en utilisant en tant que paramètres la proportion et la taille de matériaux durcissant aux rayons X dans l'objet et/ou l'épaisseur de matériaux durcissant dans l'objet et/ou la proportion de zones structurées ou inhomogènes dans l'image aux rayons X, on détermine automatiquement le degré de complexité de l'objet suite à l'inspection, et **en ce que** l'on effectue ensuite, en fonction du degré de complexité déterminé, différentes autres opérations de contrôle.

2. Procédé selon la revendication 1, **caractérisé en ce que** dans le premier dispositif de contrôle (3), les objets sont évalués automatiquement en même temps comme étant suspects ou non suspects.

3. Procédé selon la revendication 1 ou 2, **caractérisé en ce que** des objets évalués comme étant complexes ou suspects sont acheminés à d'autres opérations de contrôle tandis que des objets évalués comme étant simples et également non suspects sont directement évacués.

4. Procédé selon l'une quelconque des revendications 1 à 3, **caractérisé en ce que** dans le cas d'objets complexes ou suspects, on détermine à partir du premier dispositif de contrôle (3) les positions d'articles suspects se trouvant dans l'objet et ces positions sont transmises par des dispositifs de contrôle suivants.

5. Dispositif d'inspection de bagages et d'autres objets emportés, constitué :
- d'un premier dispositif de contrôle (3) qui est prévu pour déterminer, en utilisant en tant que paramètres la proportion et la taille de matériaux durcissant aux rayons X dans l'objet et/ou l'épaisseur de matériaux durcissant dans l'objet et/ou la proportion de zones structurées ou inhomogènes dans l'image aux rayons X, le degré de complexité de l'objet,
- d'un deuxième dispositif de contrôle suivant (5),
- de deux dispositifs de transport (1, 7) dont un dispositif de transport (1) va au deuxième dispositif de contrôle (5) et le deuxième dispositif de transport (7) passe devant le deuxième dispositif de contrôle (5), et
- comprenant un dispositif de triage (4) disposé entre le premier et le deuxième dispositif de contrôle (3, 5), depuis lequel les objets, en fonction du degré de complexité déterminé dans le premier dispositif de contrôle (3), sont transportés soit au premier dispositif de transport (1) pour être guidés jusqu'au deuxième dispositif de contrôle (5) soit au deuxième dispositif de transport (7) pour être guidés devant le deuxième dispositif de contrôle (5).

6. Dispositif selon la revendication 5, **caractérisé en ce que** les deux dispositifs de transport (1, 7) sont à nouveau réunis derrière le deuxième dispositif de contrôle (5) et l'on prévoit ensuite un deuxième dispositif de triage (6) depuis lequel les objets sont transportés soit à un poste de contrôle subséquent (8) soit directement à une zone de prélèvement (9).

7. Dispositif selon la revendication 5 ou 6, **caractérisé en ce que** le premier dispositif de contrôle (3) contient un agencement de générateurs de rayons X et des cellules de détection opposées respectives.

8. Dispositif selon l'une quelconque des revendications 5 à 7, **caractérisé en ce que** le deuxième dispositif de contrôle (5) est un échelon de contrôle ou un scanner CT fonctionnant par diffraction des rayons X.

9. Dispositif selon l'une quelconque des revendications 5 à 8, **caractérisé en ce que** deux ou plus de deux lignes de contrôle (10, 11) sont disposées l'une à côté de l'autre ou les unes à côté des autres avec à chaque fois un premier dispositif de contrôle (3) pour déterminer le degré de complexité et un dispositif de triage subséquent (4), un dispositif de transport (1) conduisant à chaque fois depuis le dispositif de triage (4) jusqu'à un deuxième dispositif de contrôle commun (5).

10. Dispositif selon la revendication 9, **caractérisé en ce que** deux lignes de contrôle (10, 11) sont disposées l'une à côté de l'autre et **en ce que** le deuxième dispositif de contrôle commun (5) se trouve entre les deux lignes de contrôle (10, 11).
